# EUROPÄISCHE PATENTSCHRIFT

(11) **EP 1 459 943 B1**
(45) Veröffentlichungstag und Bekanntmachung des Hinweises auf die Patenterteilung: **02.08.2006**
(21) Anmeldenummer: 03028309.7
(22) Anmeldetag: 09.12.2003
(51) Int. Cl.: B60R 21/20, B29C 59/00, B26D 3/08

(54) **Schneidwerkzeug zur in-process-Regelung der Restwandstärke bei der Airbagschwächung und Verfahren hierzu**
Cutting machine with a process regulation of the remaining material thickness during preweakening of an airbag cover; method thereof
Machine de découpe avec régulation de l'épaisseur résiduelle du matériau lors du prédécoupage d'un couvercle d'airbag; méthode correspondante

(30) Priorität: 15.01.2003 DE 20300628 U; 12.09.2003 DE 20314281 U
(43) Veröffentlichungstag der Anmeldung: 22.09.2004
(73) Patentinhaber: FRIMO Group GmbH, 49504 Lotte (DE)
(72) Erfinder: Wieners, Andreas, 41751 Viersen (DE)
(74) Vertreter: Moldenhauer, Herbert

(56) Entgegenhaltungen:
- EP-A- 0 976 508
- DE-A- 19 910 141
- US-A1- 2001 022 212
- PATENT ABSTRACTS OF JAPAN Bd. 2000, Nr. 25, 12. April 2001 (2001-04-12) -& JP 2001 233164 A (NISHIKAWA KASEI CO LTD), 28. August 2001 (2001-08-28)

## Beschreibung

### Technisches Gebiet

Die vorliegende Erfindung betrifft ein Schneidwerkzeug sowie ein Schneidverfahren, insbesondere zu Herstellung von Schwächungslinien in Airbag verkleidungen.

### Stand der Technik

Eine Insassen-Rückhaltevorrichtung mit aufblasbarem Gas- oder Luftsack - im folgenden "Airbag" oder "Airbageinheit" genannt - soll wie ein Sicherheitsgurt auch den Fahrzeugführer und/oder die Mitinsassen bei Verkehrsunfällen vor Verletzungen schützen und wird in der Regel zusätzlich zu den Sicherheitsgurten eingebaut.

Hinsichtlich der Wirkungsweise eines Airbags ist zu berücksichtigen, dass dieser erst bei Geschwindigkeiten ab etwa sechzehn Kilometern pro Stunde wirksam wird. Dann zündet bei einer starken Verzögerung oder Beschleunigung des Kraftfahrzeugs - wie bei einem Gurtstrammer auch - ein elektrischer oder elektronischer Sensor einen pyrotechnischen Treibsatz. Das hierbei frei werdende Gas füllt innerhalb weniger Millisekunden den Airbag, durch den der Fahrzeugführer und/oder die Mitinsassen abgestützt werden. Daraufhin entleert sich der Airbag sofort wieder, so dass sich der Fahrzeugführer und/oder die Mitinsassen wieder bewegen können.

Wie bereits angedeutet, finden Airbags in Kraftfahrzeugen nicht nur für den Fahrzeugführer, sondern zunehmend auch für die Mitinsassen Verwendung, und zwar sowohl als Frontschutz als auch als Seitenairbag zum Schutz gegen einen seitlichen Aufprall.

Der Fahrerairbag zum Schutz vor frontalen Unfällen hat seinen "natürlichen" Platz in der Lenkradnabe und fügt sich somit zwanglos in die Innenraumgestaltung des Kraftfahrzeugs ein; hingegen benötigen Beifahrer- und Seitenairbags Einbauorte, die den Gesamteindruck des Innenraums des Kraftfahrzeugs entscheidend prägen, nämlich die freie Fläche der Armaturentafel vor dem Beifahrer und die Seitenverkleidungen der Türen des Kraftfahrzeugs.

Komplette Airbageinheiten, d. h. einbaufertige Kombinationen von Abdekkung, Airbag und Gasgenerator unterbrechen diese "Gestaltungsflächen" durch Farb- und/oder Musterabweichungen, vor allem aber durch das entstehende "Fugenbild", das infolge unvermeidbarer Einbautoleranzen häufig unregelmäßig und damit unschön ist.

Es besteht daher die Tendenz, Beifahrer- und Seitenairbags "unsichtbar" einzubauen, d. h. hinter durchgehenden Kaschierungen oder Innenraumverkleidungsteilen der eingangs genannten Art anzuordnen, wie sie beispielsweise aus den Druckschriften DE 195 40 563 A1, DE 196 36 428 A1 oder DE 199 37 373 A1 bekannt sind.

Aufgrund entsprechender Designvorgaben für die Innenraumgestaltung von Kraftfahrzeugen fordert die Automobilindustrie zunehmend Instrumententafeln mit unsichtbarem Beifahrerairbag. Dazu müssen die Oberflächenschicht (= zumeist Folie oder "Haut"), der Schaum und der Träger der Instrumententafel mit Sollbruchstellen versehen werden, so dass sich beim Auslösen des Airbagtreibsatzes ein klappenförmiges Segment der Instrumententafel öffnet und sich der Airbag entfalten kann.

Gemäß dem Stand der Technik sind hierzu bei gesonderten Airbag-Kompletteinheiten die Abdeckungen des Führungskanals für den Airbag als ein- oder zweiflügelige Klappen ausgebildet, die um "plastische Scharniere" schwenkbar sind und so unter dem Druck des expandierenden Airbags eine Durchtrittsöffnung freigeben. Dieser Stand der Technik wird im Prinzip auch bei "unsichtbarem" Einbau des Airbags beibehalten:
"Klappnuten", d. h. Querschnittsschwächungen des Trägerteils, die ein "plastisches", gegebenenfalls mit einer eingearbeiteten Metalleinlage verstärktes Gelenk bilden, und "Reißnuten", die das Öffnen der Klappen sicherstellen sollen, geben dabei den Öffnungsbereich für den Airbag in der durchgehenden Verkleidung vor. Die durch diese Nuten begrenzten Klappen öffnen sich unter dem Druck des expandierenden Airbags zur Fahrgastzelle hin, so dass sich der Airbag hierhin ausdehnen kann (vgl. beispielsweise die Druckschrift DE 295 11 172 U1).

Problematisch ist hierbei das Reißverhalten der Kaschierung sowohl beim notwendigen Anriss als auch beim Weiterriss, der möglichst symmetrisch erfolgen sollte, um die Funktion des Airbags nicht zu gefährden. Es ist daher üblich (vgl. beispielsweise die Druckschrift DE 295 11 172 U1), auch die Kaschierung längs der Reißnaht im Querschnitt zu schwächen, also hier einzukerben. Eine Querschnittsschwächung von mehr als sechzig Prozent wird dabei für notwendig erachtet und in Werksnormen zum Teil auch vorgeschrieben.

Dieses Vorgehen weist aber immer noch eine Reihe von Nachteilen auf:
- Die Ausbildung großflächiger Klappen beim Öffnen des Airbagkanals birgt die Gefahr des Abreißens dieser Klappen, die dann in der Fahrgastzelle ein zusätzliches Verletzungsrisiko bedeuten;
- eine mehr als 60%ige Querschnittsschwächung definiert durchzuführen, erfordert in Anbetracht der Dickentoleranz der Kaschierfolien einen erheblichen Fertigungs- und Kontrollaufwand;
- die notwendige Querschnittsschwächung der Kaschierfolie ist so groß, dass die Gefahr besteht, dass sich dieser Bereich auf der Sichtseite abzeichnet.

Es gibt daher Vorschläge, mit dem expandierenden Airbag gesondert Schneidmesser zu betätigen, um so unabhängig von Toleranzen in der Kaschierfoliendicke ein definiertes Aufreißen der Kaschierung sicherzustellen (vgl. beispielsweise die Druckschrift US 5 316 335); allerdings ist hierin eine Vorgehensweise zu sehen, die zusätzlichen Fertigungsaufwand erfordert und bei der die verhältnismäßig "robusten" Messer ein weiteres Verletzungsrisiko bedeuten, denn die Messer durchtrennen sowohl das Trägerteil als auch die Kaschierung.

In weiteren Versuchen wurden konventionellerweise Folien per se gespannt, die entsprechend der Anordnung des Airbags geschwächt sind, wobei die Schwächung der Aufreißkante in Längsrichtung beispielsweise mit einem Laser bewerkstelligt wird.

Diese Art der Schwächung ist aber bei Zugbelastung quer zur Aufreißnaht sehr empfindlich, denn hierbei wird die Naht auseinander gezogen, und die Aufreißkante klafft dauerhaft sichtbar auf. Eine solche Zugbelastung quer zur Aufreißkante ist beispielsweise im Bereich von Wölbungen gegeben, weil beim Spannen der Folie über eine gewölbte Fläche Zugkräfte in Umfangsrichtung entstehen. Durch die Schwächung, beispielsweise durch kleine Schnitte oder Poren, bleibt in der Folie nur noch ein Restquerschnitt der nicht geschwächten Abschnitte übrig, der die Zugkräfte entsprechend tragen muss.

Bei einigen Materialien können durch das Aufklaffen der Schwächung Schnittkanten entstehen, die bei Hautkontakt zu Hautverletzungen, wie etwa zu Schürfungen, führen können. Letztere Gefahr besteht insbesondere bei Verwendung der Folie zur Abdeckung eines Knieairbagmoduls, denn hier kann der Abstand zwischen Folie und Fahrzeuginsasse sehr gering sein.

Des weiteren ist es von Nachteil, dass sichtbar große Aufklaffungen der Schwächung eine unerwünschte Schmutzhaftung sowie einen leichten Schmutz- und Feuchtigkeitsdurchtritt durch die Schwächung ermöglichen. Bei der Kaschierung des Innenraums eines Fahrzeugs sind insbesondere der Kniebereich der Armatur oder die Instrumententafel Bereiche mit gewölbten Flächen, die von einer solchen Folie überspannt werden und bei denen die vorstehend beschriebenen Probleme auftreten.

Nicht zuletzt um die vorgenannten Schwierigkeiten zu umgehen, hat sich bei konventionellen Oberflächenmaterialien, wie z. B. P[oly]V[inyl]C[hlorid] oder T[hermo]P[lastischen]O[lefinen], zum Herstellen der Sollbruchstelle ein Schneidverfahren mittels Ultraschall etabliert. Dabei wird mit einer skalpellartigen Klinge an der rückseitigen Oberfläche der Haut ein Schnitt angebracht. Maschinenseitig wird die Klinge entlang der gewünschten Kontur geführt, wobei die Restwandstärke der Haut durch die Tiefeneinstellung der Maschine definiert ist.

Die zum reaktionsarmen Schneiden erforderliche Längsbewegung des Messers wird durch eine Ultraschallsonotrode erzeugt, die das Messer longitudinal mit einer Frequenz von etwa zwanzig Kilohertz und mit einer Amplitude von etwa zwanzig Mikrometern schwingen lässt. In der Automobilindustrie hat sich für dieses Verfahren der Begriff "Scoring" etabliert.

Als kostengünstige und umweltfreundliche Alternative zu den oben genannten Hautmaterialien (P[oly]V[inyl]C[hlorid], T[hermo]P[lastischen]O[lefine], ...) gewinnt P[oly]U[rethan] gegenwärtig zunehmend an Bedeutung, was sich in steigenden Marktanteilen bemerkbar macht. P[oly]U[rethan]-Häute können in geschlossenen Formen durch Gießen oder in offenen Formen durch Sprühen hergestellt werden.

Beim Einschneiden von Materialien, wie z. B.
- aus P[oly]U[rethan]-Elastomeren,
- aus P[oly]V[inyl]C[hlorid],
- aus T[hermo]P[lastischen]E[lastomeren],
- aus T[hermo]P[lastischen]E[lastomeren auf Polyether]-E[ster-Basis],
- aus T[hermo]P[lastischen]O[lefinen] und/oder
- aus T[hermo]P[lastischen Poly]U[rethanen]
als Strukturhaut, als Slushhaut, als Spritzsprühhaut und/oder als Gießhaut unter Beibehaltung einer Restwandstärke des Materials mit derartigen Schneidwerkzeugen zum Zwecke der Herstellung einer Material-Sollbruchstelle für die Freigabe von in Instrumententafeln, in Seitenverkleidungen der Türen eines Fahrzeugs und in der Lenkradnabe eingebaute Airbags als Insassenschutz hat es sich gezeigt, dass das zulässige Toleranzfeld der Restwandstärke der Materialhaut in Abhängigkeit von den Randbedingungen bis zu + 30 Mikrometer heruntergeht.

Um diese Exaktheit zu erzielen, sind Maschinen erforderlich, bei denen die geometrisch und thermisch bedingte Genauigkeit nur durch aufwendige Maßnahmen sichergestellt werden kann. Die Investitionskosten für derartige Maschinen sind sehr hoch.

Eine bisherige Lösung besteht im Einsatz eines deutlich preiswerteren Knickarmroboters, der mit sechs in Reihe geschalteten Drehachsen alle benötigten translatorischen und rotatorischen Freiheitsgrade darstellen kann. Trotz ausreichender Bahngenauigkeit kann der Roboter jedoch den Reaktionskräften aus dem Prozess keine ausreichende Steifigkeit entgegensetzen, um ein dynamisches Aufbiegen der Struktur und damit eine unzulässig große Bahnabweichung zu verhindern.

Die DE 199 10 141 A zeigt ein Schneidwerkzeug (100) für Airbagverkleidungen mit Schwächungsstrukturen welches Schneidwerkzeug (100) in seiner Bewegung gesteuert, insbesondere programm- und/oder robotergesteuert, ist, umfassend mindestens einen Schneidkopf
- mit mindestens einer Schneidklinge,
- mit mindestens einem Klingenhalter für die Schneidklinge und
- mit mindestens einer den Klingenhalter mit der Schneidklinge in eine oszillierende bzw. pulsierende Schneidbewegung versetzenden Antriebsvorrichtung (20) und
- mit mindestens einer den Klingenhalter mit der Schneidklinge in eine ziehende, den Schnitt erzeugende Vorschubbewegung versetzenden robotergesteuerten Einrichtung,
- wobei zur in-process-Regelung der Restwandstärke der eingeschnittenen Materialien bei der Ausbildung von Schwächungslinien bzw. von Sollbruch- und Trennungslinien, d. h. bei der Airbagschwächung, ein Abstandssensor (85) vorgesehen ist, und ein entsprechends Verfahren.

### Darstellung der Erfindung: Aufgabe, Lösung, Vorteile

Ausgehend von den vorstehend dargelegten Nachteilen und Unzulänglichkeiten sowie unter Würdigung des umrissenen Standes der Technik liegt der vorliegenden Erfindung die Aufgabe zugrunde, eine Vorrichtung mit einem Schneidwerkzeug zum Zwecke der Herstellung einer Material-Sollbruchstelle für die Freigabe von in Instrumententafeln, in Seitenverkleidungen der Türen eines Fahrzeugs und in der Lenkradnabe eingebaute Airbags als Insassenschutz so auszubilden, dass die Vorrichtung in der Lage ist, die Restwandstärke bei einer Airbagschwächung zu regeln und zu messen.

Diese Aufgabe wird gemäß der Lehre der vorliegenden Erfindung durch ein Schneidwerkzeug mit den im Anspruch 1 genannten Merkmalen sowie durch ein Verfahren mit den im Anspruch 5 genannten Merkmalen gelöst. Vorteilhafte Ausgestaltungen und zweckmäßige Weiterbildungen der vorliegenden Erfindung sind in den jeweiligen Unteransprüchen gekennzeichnet.

Danach besteht die Erfindung insbesondere darin,
- dass zur in-process-Regelung der Restwandstärke der eingeschnittenen Materialien bei der Ausbildung von Schwächungslinien bzw. von Sollbruch- und Trennungslinien, d. h. bei der Airbagschwächung, am Schneidkopf des Schneidwerkzeuges neben dessen Schneidklinge oder neben dem Schneidwerkzeug mit dessen Führungs- und Bewegungseinrichtung verbunden zur Messung des Abstandes zu einer Schneidgegenplatte mindestens ein Abstandssensor mit einem Messprinzip vorgesehen ist, das derart gewählt ist, dass das Sensorsignal in keiner Weise durch eine in der Schneidaufnahme liegende Formhaut beeinflussbar ist, wobei das Sensorsignal als Messgröße eines Regelkreises dient, bei dem
- der Abstand A zwischen dem Abstandssensor und der Schneidgegenplatte oder
- der Abstand A2 zwischen der Werkzeugspitze, d. h. der Schneidklinge und der Schneidgegenplatte die Regelgröße ist,
- wobei als Stellglied die robotergesteuerte Einrichtung mit ihrem Regelkreis oder mindestens eine zusätzliche zwischengeschaltete Stellachse wirkt, und sich die Restwandstärke A2 aus dem gemessenen Abstand abzüglich eines Abstandes A1 errechnet, wobei A1 die Höhendifferenz zwischen dem Abstandssensor und der Spitze der Schneidklinge ist, und
- wobei der Abstandssensor auf induktivem Funktionsprinzip beruht, sowie der Induktivsensor des Abstandssensor so abgestimmt ist, dass der Abstand des Induktivsensors zu mindestens einem elektrisch leitenden Gegenstand und zur Schneidgegenplatte erfassbar ist.

Das Messprinzip ist gemäß der Lehre der vorliegenden Erfindung nun derart gewählt, dass das Sensorsignal in keiner Weise durch eine in der Schneidaufnahme liegende Formhaut beeinflussbar ist, wobei das Sensorsignal als Messgröße eines Regelkreises dient, bei dem der Abstand zwischen der Werkzeugspitze bzw. Schneidklinge und der Schneidgegenplatte die Regelgröße ist. Als Stellglied kann die robotergesteuerte Einrichtung mit ihrem Lageregelkreis oder mindestens eine zusätzlich zwischengeschaltete Stellachse wirken.

Des weiteren sieht die Erfindung ein Verfahren zur in-process-Regelung der Restwandstärke bei der Airbagschwächung vermittels eines in seiner Bewegung gesteuerten, d. h. insbesondere programm- und/oder robotergesteuerten Schneidwerkzeugs für Materialien, insbesondere z. B. aus PU-Elastomeren, aus PVC, aus TPE, aus TPE-E (= thermoplastische Elastomere auf Basis von Polyester), aus TPO und/oder aus TPU als Strukturhaut, als Slushhaut, als Spritzsprühhaut und/oder als Gießhaut vor.

Das Schneidwerkzeug weist mindestens einen Schneidkopf mit einer Schneidklinge, mit einem Klingenhalter für die Schneidklinge und mit einer den Klingenhalter mit der Schneidklinge in eine bevorzugte oszillierende bzw. pulsierende Schneidbewegung versetzenden Antriebsvorrichtung auf; alternativ oder ergänzend hierzu kann das Schneidwerkzeug mittels der robotergesteuerten Einrichtung in eine ziehende, den Schnitt erzeugende Vorschubbewegung versetzt werden.

Das Verfahren selbst besteht gemäß der Lehre der vorliegenden Erfindung darin, dass die Schneidklinge zur Erzeugung von entlang einer Sollbruchlinie verlaufenden Schwächungsstrukturen im Material der Airbag-Verkleidung mit mindestens einer vorgegebenen Vorschubgeschwindigkeit entlang der Sollbruchlinie verfahren und das Material eingeschnitten wird.

Hierbei wird vermittels mindestens eines neben dem Schneidwerkzeug angeordneten und zusammen mit dem Schneidwerkzeug geführten Abstandssensors der Abstand vom Abstandssensor zu einer das einzuschneidende Material aufnehmenden Schneidgegenplatte gemessen.

Die Restwandstärke wird dann aus dem zwischen Abstandssensor und Schneidgegenplatte gemessenen Abstand abzüglich des vorgegebenen und während des Schneidvorgangs konstant gehaltenen Werts für den Abstand des Abstandssensors von der Grundfläche, d. h. von der Bodenfläche des Einschnitts in das Material errechnet, wobei die Schneidklingentiefe bei Abweichungen automatisch nachgeregelt wird.

Des weiteren sieht die Erfindung vor, dass zur in-process-Regelung der Restwandstärke von eingeschnittenen Materialien bei der Airbagschwächung am Schneidkopf des Schneidwerkzeugs neben dessen Schneidklinge oder neben dem Schneidwerkzeug mit dessen Führungs- und Bewegungseinrichtung verbunden zur Messung des Abstands zu einer Schneidgegenplatte mindestens ein Abstandssensor mit einem Messprinzip angeordnet ist, das derart gewählt wird, dass das Sensorsignal in keiner Weise durch eine in der Schneidaufnahme liegende Formhaut beeinflusst wird.

Hierbei wird das Sensorsignal als Messgröße eines Regelkreises herangezogen, bei dem der Abstand zwischen der Werkzeugspitze bzw. Schneidklinge und der Schneidgegenplatte die Regelgröße ist, wobei als Stellglied die robotergesteuerte Einrichtung mit ihrem Lageregelkreis oder eine zusätzliche zwischengeschaltete Stellachse wirkt; die Restwandstärke wird aus dem Wert des Abstands zwischen dem Abstandssensor und der Schneidgegenplatte abzüglich der vorgegebenen Höhendifferenz zwischen dem Abstandssensor und der Klingenspitze errechnet.

Mit dem erfindungsgemäß ausgebildeten Schneidwerkzeug wird eine hohe Genauigkeit bei der Herstellung der Restwandstärke der Haut ohne aufwendige Maßnahmen oder ohne aufwendige Einrichtungen erreicht. Die sich bei den bisher bekannten Lösungen ergebenden Nachteile werden verhindert.

Die Maschine ist somit in der Lage, dynamische Abweichungen zwischen der Werkzeugspitze und der Schneidgegenplatte mit hoher Auflösung zu detektieren und diese sofort zu kompensieren; insofern kann der Schneidroboter mit einfachen steuerungstechnischen Mitteln ein gleich enges Toleranzfeld einhalten, wie dies sonst nur mit wesentlich teureren Maschinen möglich ist.

Die vorliegende Erfindung betrifft schließlich die Verwendung mindestens eines Schneidwerkzeugs gemäß der vorstehend dargelegten Art und/oder eines Verfahrens gemäß der vorstehend dargelegten Art bei der Herstellung von Airbagverkleidungen mit Schwächungsstrukturen, insbesondere bei der Ausbildung von Schwächungslinien bzw. von Sollbruch- und Trennungslinien in zur Verkleidung von Airbags vorgesehenen Materialien, z. B.
- aus P[oly]U[rethan]-Elastomeren,
- aus P[oly]V[inyl]C[hlorid],
- aus T[hermo]P[lastischen]E[lastomeren], auch auf Polyester- bzw. Polyether-Ester-Basis,
- aus T[hermo]P[lastischen]O[lefinen] und/oder
- aus T[hermo]P[lastischen Poly]U[rethanen]
als Strukturhaut, als Slushhaut, als Spritzsprühhaut und/oder als Gießhaut.

### Kurze Beschreibung der Zeichnungen

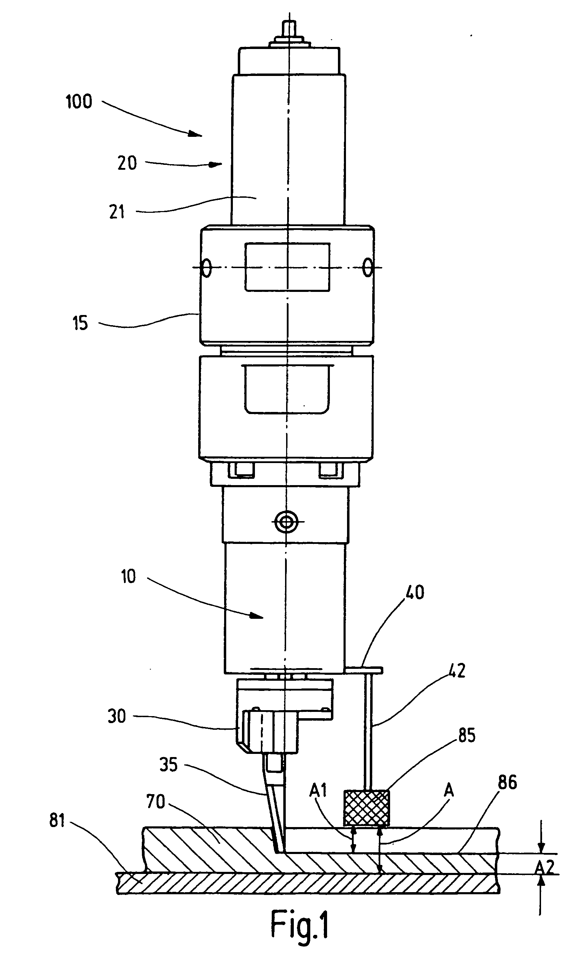

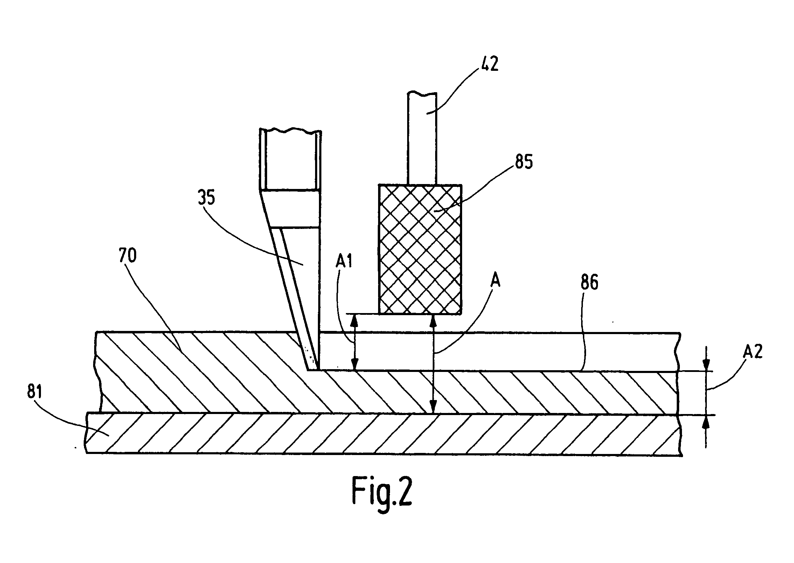

Wie bereits vorstehend erörtert, gibt es verschiedene Möglichkeiten, die Lehre der vorliegenden Erfindung in vorteilhafter Weise auszugestalten und weiterzubilden. Hierzu wird einerseits auf die den Ansprüchen 1 und 7 nachgeordneten Ansprüche verwiesen, andererseits werden weitere Ausgestaltungen, Merkmale und Vorteile der vorliegenden Erfindung nachstehend anhand des durch die Fig. 1 und 2 veranschaulichten Ausführungsbeispiels näher erläutert.

Es zeigt:
- Fig. 1: in schematischer Teilschnittansicht einen Schneidkopf mit einer Schneidklinge eines Ausführungsbeispiels für ein Schneidwerkzeug gemäß der vorliegenden Erfindung, wobei am Schneidkopf ein Abstandssensor einer extern zum Schneidkopf angeordneten Schnitttiefenerkennungsvorrichtung angeordnet ist und
- Fig. 2: in schematischer Teilschnittansicht ein Detail aus Fig. 1.

Gleiche oder ähnliche Ausgestaltungen, Elemente oder Merkmale sind in den Fig. 1 und 2 mit identischen Bezugszeichen versehen.

### Bester Weg zur Ausführung der Erfindung

Das erfindungsgemäße Schneidwerkzeug 100 für Materialien 70, insbesondere für P[oly]U[rethan]-Elastomere, für P[oly]V[inyl]C[hlorid], für T[hermo]P[lastische]E[lastomere], für T[hermo]P[lastische]E[lastomere auf Polyether]-E[ster-Basis], für T[hermo]P[lastische]O[lefine] und/oder für T[hermo]P[lastische Poly]U[rethane], umfasst vorzugsweise in einem Gehäuse 15 einen Schneidkopf 10 mit einer Antriebseinrichtung 20, die als Antriebsmotor 21 ausgebildet ist, mit einem Klingenhalter 30 und mit einer Schneidklinge 35, die im Klingenhalter 30 auswechselbar angeordnet ist (vgl. Fig. 1: sogenannter "Vocks-Kopf").

Die Realisierung des Schneidwerkzeugs 100 gemäß der vorliegenden Erfindung ist in erfindungswesentlicher Weise aber auch mit mindestens einem Ultraschallkopf oder mit mindestens einer feststehenden Klinge möglich. In jedem Falle weist das Schneidwerkzeug 100 mindestens einen Schneidkopf 10 auf, wobei das Schneidwerkzeug 100 auch mit zwei oder mehr Schneidköpfen 10 versehen sein kann.

Die Bewegung des Schneidwerkzeugs 100 erfolgt mittels eines Roboters bzw. mittels einer entsprechenden Steuereinrichtung, mit der der Bewegungsvorlauf des Schneidwerkzeugs 100 entsprechend einem vorgegebenen Schnittverlauf gesteuert wird. Bei der Verwendung eines ziehenden Schneidmessers 35 wird der Vorschub des Schneidkopfs 10 über den Roboter bzw. über die Steuereinrichtung gesteuert.

Alle Schneidvorgänge, Schnittbahnen und dergleichen werden vorzugsweise automatisch mit einer in der Zeichnung aus Gründen der Übersichtlichkeit nicht dargestellten Führungs- und Bewegungseinrichtung gesteuert.

Die Oszillation des Messers 35 wird durch eine Axialkurve mechanisch geführt (vergleichbar mit der Bewegung eines Ventils an einem Ottomotor, die durch die Form der Nockenwelle geführt bzw. gesteuert wird). Die Bahnkurve, die die Schneidklinge 35 auf der Formhaut 70 beschreibt, wird durch ein Programm beschrieben, wobei es unerheblich sein sollte, ob die Bahnkurve durch die Bewegung eines Roboters oder einer anderen Maschine umgesetzt wird.

Am Schneidkopf 10 des Schneidwerkzeugs 100 ist neben dessen Schneidklinge 35 ein Abstandssensor 85 oberhalb des auf der Schneidgegenplatte 81 liegenden einzuschneidenden Materials 70 angeordnet. Der Abstand des Abstandssensors 85 zur Schneidklinge 35 sollte gering gewählt sein. Mit dem Abstandssensor 85 wird der Abstand A vom Abstandssensor 85 zur Schneidgegenplatte 81 gemessen.

Hierbei ist der Abstandssensor 85 in exemplarischer Weise als zylindrischer Körper ausgestaltet, der über eine relativ solide Verbindung 40, 42 an den Schneidkopf 10 des Schneidwerkzeugs 100 angebunden ist. Der Abstandssensor 85 beruht auf einem induktiven Funktionsprinzip, wobei der Induktivsensor so abgestimmt ist, dass der Abstand des Induktivsensors zu einem elektrisch leitenden Gegenstand erfasst wird.

Da das Hautmaterial 70 nicht elektrisch leitend und aus diesem Grunde "unsichtbar" für den Abstandssensor 85 ist, wird durch den Abstandssensor 85 der Abstand A bis zur Schneidgegenlage 81 gemessen, denn diese Schneidgegenlage (= Schneidgegenplatte 81) ist aus Stahl (vgl. hierzu auch Fig. 2).

Die Höhendifferenz A1 (vgl. hierzu auch Fig. 2) zwischen dem Abstandssensor 85 und der Spitze der Schneidklinge 35 wird mittels eines geeigneten Messgeräts gemessen. Für den Schneidvorgang ist dieser Abstandswert A1 damit bekannt und konstant. Die aktuelle Restwandstärke A2 (vgl. hierzu auch Fig. 2), die senkrecht zur Oberfläche 86 der geschnittenen Haut 70 spezifiziert ist, wird dann aus dem aktuell gemessenen Abstand A abzüglich des konstanten Abstands A1 errechnet. Dieser Wert A2 wird der Regelung als aktueller Ist-Wert zugeführt.

Zu berücksichtigen ist im Hinblick auf die Höhe des Abstandssensors 85 über dem einzuschneidenden Material 70, dass dieses zu schneidende Material 70 Schwankungen in seiner Dicke von bis zu etwa 0,4 Millimetern unterliegen kann, denn das Material 70 wird z. B. durch einen P[oly]U[rethan]-Sprühprozess in eine offene Form hergestellt.

Mit der Lehre gemäß der vorliegenden Erfindung ist es möglich, trotz dieser Dickenschwankungen einen Einschnitt mit exakt konstanter Restwandstärke A2 zu erzielen. Die Höhe des Abstandssensors 85 oberhalb des zu schneidenden Materials ist insofern veränderbar, als diese Höhe von der schwankenden Dicke des Materials 70 abhängt.

Gemäß einer erfindungswesentlichen Weiterbildung des vorliegenden Schneidwerkzeugs 100 kann die Anordnung des Abstandssensors 85 in geeigneter Weise auch an der Führungs- und Bewegungseinrichtung für das Schneidwerkzeug 100 erfolgen.

Das Online-Messprinzip des zur Erfassung der Restwandstärke A2 vorgesehenen Abstandssensors 85 ist so gewählt, dass das Signal des Abstandssensors 85 in keiner Weise durch eine in der Schneidaufnahme liegende Formhaut (Dicke, Farbe, Material, Narbung oder dergleichen) beeinflusst wird, denn das Hautmaterial 70 ist nicht elektrisch leitend und aus diesem Grunde "unsichtbar" für den Abstandssensor 85 (vgl. oben; wenn die Formhaut das Messsignal beeinflussen würde, könnte das Messsignal nicht als Maß für die Restwandstärke A2 verwendet werden).

Was nun die in-process-Regelung der Restwandstärke A2 des eingeschnittenen Materials 70 anbelangt, so bedeutet "in process", dass diese Regelung zeitparallel zur Bearbeitung stattfindet. Das Sensorsignal dient nun als Messgröße eines Regelkreises, bei dem der Abstand zwischen der Spitze des Schneidwerkzeugs 100 und der Schneidgegenplatte 81 die Regelgröße ist.

Als Stellglied kann z. B. eine externe zusätzliche zwischengeschaltete Stellachse mit eigener Regelung fungieren. Eine derartige zusätzliche zwischengeschaltete Stellachse stellt technisch eine Lösung dar, wenn die verwendete Steuerung nicht die Möglichkeit zulässt, eine Messgröße in der Lageregelung mitzuverarbeiten.

In diesem Falle kann eine zusätzliche lineare Bewegungsachse in Achsrichtung des Schneidkopfs 10 eingebaut werden. Die zusätzliche Bewegung wird dann nicht regelungstechnisch, sondern mechanisch überlagert, wozu eine externe Steuerung erforderlich ist.

Gemäß einer Alternative oder Weiterbildung der vorliegenden Erfindung kann auch eine Steuerung auf C[omputerized]N[umerical]C[ontrol]-Basis (CNC = computerunterstützte numerische Maschinensteuerung) eingesetzt werden, sofern diese CNC-Steuerung über die Möglichkeit verfügt, eine Messgröße in der Lageregelung mitzuverarbeiten.

Eine externe zusätzliche zwischengeschaltete Stellachse mit eigener Regelung oder auch eine CNC-Steuerung ist als technisch einem nachfolgend beschriebenen Roboter mit Lageregelkreis gleich gestaltet anzusehen.

Als Stellglied kann also alternativ oder ergänzend auch der Roboter selbst mit seinem Lageregelkreis wirken, wobei in diesem Falle die Information für das Stellglied dem Regelkreis in der Lageregelung der Robotersteuerung entnommen wird.

Im exemplarischen Falle, dass der Roboter selbst mit seinem Lageregelkreis als Stellglied fungiert, ist dieser Lageregelkreis in die Steuerung der Maschine, und hierbei insbesondere in die Lageregelung der Steuerung integriert. Die einzige hergestellte Verbindung zum Schneidwerkzeug 100 besteht dann darin, dass die Messgröße, d. h. das Signal des Abstandssensors 85 verstärkt und an einer analogen Schnittstelle der Steuerung in den Regelkreis eingespeist wird.

In diesem Falle ist die Maschine ein Knickarmroboter, doch es kann genauso gut eine konventionelle kartesische Maschine mit x-Achse, mit y-Achse und mit z-Achse sein.

Sofern die Maschine allerdings nicht über die Funktion eines externen überlagerten Regelkreises verfügt, ist es auch möglich, eine externe zusätzliche, z. B. P[ersonal]C[omputer]-basierte Regelung einzusetzen. Grundsätzlich gilt, dass der Regelkreis technisch im wesentlichen gleich gestaltet ist, und zwar unabhängig davon, ob der Regelkreis in einen Roboter oder in eine Maschine integriert ist.

Der Regelkreis dient dazu, das Messsignal des Abstandssensors 85 möglichst konstant zu halten.-Wenn das Signal - bedingt z. B. durch Störgrößen - von der Sollgröße abweicht, erzeugt der Regelkreis eine der Störgröße gegengerichtete Stellgröße.

In diesem Zusammenhang wird das externe Signal als überlagerte Messgröße zugeführt. In der Steuerung ist die Stellgröße so verschaltet, dass die Stellgröße eine Korrekturbewegung genau in senkrechter Richtung erzeugt.

### Bezugszeichenliste

- 100: Schneidwerkzeug
- 10: Schneidkopf
- 15: Gehäuse
- 20: Antriebsvorrichtung
- 21: Antriebsmotor der Antriebsvorrichtung 20
- 30: Klingenhalter
- 35: Messerklinge oder Schneidklinge
- 40: (erste Komponente der) Verbindung zwischen Schneidkopf 10 und Abstandssensor 85
- 42: (zweite Komponente der) Verbindung zwischen Schneidkopf 10 und Abstandssensor 85
- 70: einzuschneidendes Material, insbesondere Hautmaterial
- 81: Schneidgegenlage oder Schneidgegenplatte
- 85: Abstandssensor
- 86: Bodenfläche des Einschnitts in das Material 70
- A: Abstand zwischen Abstandssensor 85 und Schneidgegenplatte 81
- A1: Höhendifferenz zwischen Abstandssensor 85 und Spitze der Schneidklinge 35
- A2: Restwandstärke = Abstand A minus Höhendifferenz A1 1

## Patentansprüche

1. Schneidwerkzeug (100) für Materialien (70)
insbesondere
- aus P[oly]U[rethan]-Elastomeren,
- aus P[oly]V[inyl]C[hlorid],
- aus T[hermo]P[lastischen]E[lastomeren], auch auf Polyester oder Polyether-Ester-Basis,
- aus T[hermo]P[lastischen]O[lefinen] und/oder
- aus T[hermo]P[lastischen Poly]U[rethanen]
als Strukturhaut, als Slushhaut, als Spritzsprühhaut und/oder als Gießhaut, insbesondere für Airbagverkleidungen mit Schwächungsstrukturen,
welches Schneidwerkzeug (100) in seiner Bewegung gesteuert, insbesondere programm- und/oder robotergesteuert, ist, umfassend mindestens einen Schneidkopf (10)
- mit mindestens einer Schneidklinge (35),
- mit mindestens einem Klingenhalter (30) für die Schneidklinge und
- mit mindestens einer den Klingenhalter (30) mit der Schneidklinge (35) in eine oszillierende pulsierende Schneidbewegung versetzenden Antriebsvorrichtung (20) oder
- mit mindestens einer den Klingenhalter (30) mit der Schneidklinge (35) in eine ziehende, den Schnitt erzeugende Vorschubbewegung versetzenden robotergesteuerten Einrichtung,
- mit einem Regelkreis zur in-process-Regelung der Restwandstärke (A2) der eingeschnittenen Materialien (70) bei der Ausbildung von Schwächungslinien oder von Sollbruch- und Trennungslinien, also bei der Airbagschwächung, am Schneidkopf (10) des Schneidwerkzeugs (100) neben dessen Schneidklinge (35) oder neben dem Schneidwerkzeug (100) mit dessen Führungs- und Bewegungseinrichtung verbunden zur Messung des Abstands zu einer Schneidgegenplatte (81) mindestens ein Abstandssensor (85) mit einem Messprinzip vorgesehen ist, das derart gewählt ist, dass das Sensorsignal in keiner Weise durch eine in der Schneidaufnahme liegende Formhaut beeinflussbar ist, wobei das Sensorsignal als Messgröße des Regelkreises dient, bei dem
- der Abstand (A) zwischen dem Abstandssensor (85) und der Schneidgegenplatte (81) oder
- der Abstand (A2) zwischen der Werkzeugspitze, also der Schneidklinge (35) und der Schneidgegenplatte (81) die Regelgröße ist,
- als Stellglied die robotergesteuerte Einrichtung mit ihrem Regelkreis oder mindestens eine zusätzliche zwischengeschaltete Stellachse wirkt, und sich die Restwandstärke (A2) aus dem gemessenen Abstand abzüglich eines Abstandes (A1) errechnet, wobei (A1) die Höhendifferenz zwischen dem Abstandssensor (85) und der Spitze der Schneidklinge (35) ist, und
- der Abstandssensor (85) auf induktivem Funktionsprinzip beruht, sowie der Induktivsensor des Abstandssensors (85) so abgestimmt ist, dass der Abstand des Induktivsensors zu mindestens einem elektrisch leitenden Gegenstand, insbesondere zur Schneidgegenplatte (81), erfassbar ist.

2. Schneidwerkzeug gemäß Anspruch 1,
**dadurch gekennzeichnet,**
**dass** der Abstandssensor (85) als mindestens ein zylindrischer Körper ausgebildet ist, der über mindestens eine ein- oder mehrteilige Verbindung (40, 42) an den Schneidkopf (10) angebunden ist.

3. Schneidwerkzeug gemäß einem der Ansprüche 1 oder 2,
**dadurch gekennzeichnet,**
**dass** der Regelkreis
- als Lageregelkreis ausgebildet und/oder
- im Schneidwerkzeug (100) integriert ist.

4. Schneidwerkzeug gemäß mindestens einem der Ansprüche 1 bis 3,
**dadurch gekennzeichnet,**
**dass** die Verbindung des Regelkreises zum Schneidwerkzeug (100) dergestalt ausgebildet ist, dass die Messgröße, d. h. das Signal des Abstandssensors (85)
- verstärkt und
- an mindestens einer analogen Schnittstelle der Steuerung in den Regelkreis eingespeist
werden kann.

5. Verfahren zur in-process-Regelung der Restwandstärke (A2) bei der Airbagschwächung vermittels eines in seiner Bewegung gesteuerten, insbesondere programm- und/oder robotergesteuerten Schneidwerkzeugs (100) für Materialien (70), insbesondere
- aus P[oly]U[rethan]-Elastomeren,
- aus P[oly]V[inyl]C[hlorid],
- aus T[hermo]P[lastischen]E[lastomeren], auch auf Polyester- bzw. Polyether-Ester-Basis,
- aus T[hermo]P[lastischen]O[lefinen] und/oder
- aus T[hermo]P[lastischen Poly]U[rethanen]
als Strukturhaut, als Slushhaut, als Spritzsprühhaut und/oder als Gießhaut, wobei das Schneidwerkzeug (100) mindestens einen Schneidkopf (10)
- mit mindestens einer Schneidklinge (35) und
- mit mindestens einem Klingenhalter (30) für die Schneidklinge (35) aufweist, wobei der Klingenhalter (30) mit der Schneidklinge (35)
- mittels mindestens einer Antriebsvorrichtung (20) in eine oszillierende bzw. pulsierende Schneidbewegung oder
- mittels mindestens einer robotergesteuerten Einrichtung in eine ziehende, den Schnitt erzeugende Vorschubbewegung versetzt wird,
- die Schneidklinge (35) zur Erzeugung von entlang mindestens einer Sollbruchlinie verlaufenden Schwächungsstrukturen im Material (70) der Airbag-Verkleidung mit mindestens einer vorgegebenen Vorschubgeschwindigkeit entlang der Sollbruchlinie verfahren und das Material (70) eingeschnitten wird,
- vermittels mindestens eines neben dem Schneidwerkzeug (100) bzw. neben der Schneidklinge (35) angeordneten und zusammen mit dem Schneidwerkzeug (100) bzw. zusammen mit der Schneidklinge (35) geführten Abstandssensors (85) der Abstand (A) vom Abstandssensor (85) zu einer das einzuschneidende Material (70) aufnehmenden Schneidgegenplatte (81) gemessen wird und
- die Restwandstärke (A2) aus dem zwischen dem Abstandssensor (85) und der Schneidgegenplatte (81) gemessenen Abstand (A) abzüglich des vorgegebenen und während des Schneidvorgangs konstant gehaltenen Werts für den Abstand (A1) des Abstandssensors (85) von der Grundfläche, d. h. von der Bodenfläche (86) des Einschnitts in das Material (70) errechnet wird, wobei die Tiefe der Schneidklinge (35) bei Abweichungen automatisch nachgeregelt wird.

6. Verfahren gemäß Anspruch 5,
**dadurch gekennzeichnet,**
**dass** zur in-process-Regelung der Restwandstärke (A2) von eingeschnittenen Materialien (70) bei der Ausbildung von Schwächungslinien bzw. von Sollbruch- und Trennungslinien bei der Airbagschwächung am Schneidkopf (10) des Schneidwerkzeugs (100) neben dessen Schneidklinge (35) oder neben dem Schneidwerkzeug (100) mit dessen Führungs- und Bewegungseinrichtung verbunden zur Messung des Abstands zur Schneidgegenplatte (81) mindestens ein Abstandssensor (85) mit einem Messprinzip vorgesehen wird, das derart gewählt wird, dass das Sensorsignal in keiner Weise durch eine in der Schneidaufnahme liegende Formhaut beeinflusst wird, wobei das Sensorsignal als Messgröße eines Regelkreises herangezogen wird, bei dem
- der Abstand (A) zwischen dem Abstandssensor (85) und der Schneidgegenplatte (81) oder
- der Abstand (A2) zwischen der Werkzeugspitze, d. h. der Schneidklinge (35) und der Schneidgegenplatte (81)
die Regelgröße ist, wobei als Stellglied die robotergesteuerte Einrichtung mit ihrem Regelkreis oder mindestens eine zusätzlich zwischengeschaltete Stellachse wirkt, wobei die Restwandstärke (A2) aus dem Wert des Abstands (A) zwischen dem Abstandssensor (85) und der Schneidgegenplatte (81) abzüglich der Höhendifferenz (A1) zwischen dem Abstandssensor (85) und der Spitze der Schneidklinge (35) errechnet wird.

7. Verfahren gemäß Anspruch 5 oder 6,
**dadurch gekennzeichnet,**
**dass** die Verbindung des Regelkreises, insbesondere des Lageregelkreises, zum Schneidwerkzeug (100) dergestalt ausgebildet wird, dass die Messgröße, d. h. das Signal des Abstandssensors (85)
- verstärkt und
- an mindestens einer analogen Schnittstelle der Steuerung in den Regelkreis eingespeist
wird.

8. Verwendung mindestens eines Schneidwerkzeugs (100) gemäß mindestens einem der Ansprüche 1 bis 4 und/oder eines Verfahrens gemäß mindestens einem der Ansprüche 5 bis 7 bei der Herstellung von Airbagverkleidungen mit Schwächungsstrukturen, insbesondere bei der Ausbildung von Schwächungslinien bzw. von Sollbruch- und Trennungslinien in zur Verkleidung von Airbags vorgesehenen Materialien (70), z. B.
- aus P[oly]U[rethan]-Elastomeren,
- aus P[oly]V[inyl]C[hlorid],
- aus T[hermo]P[lastischen]E[lastomeren], auch auf Polyester- bzw. Polyether-Ester-Basis,
- aus T[hermo]P[lastischen]O[lefinen] und/oder
- aus T[hermo]P[lastischen Poly]U[rethanen]
als Strukturhaut, als Slushhaut, als Spritzsprühhaut und/oder als Gießhaut.

## Claims

1. A cutting tool (100) for materials (70),
in particular
- of P[oly] U[rethane] Elastomers,
- of P[oly] V[inyl] C[hloride],
- of T[hermo] P[lastic] E[lastomers], including
- those based on polyester or polyether ester,
- of T[hermo] P[lastic] O[lefins] and/or
- of T[hermo] P[lastic poly] U[rethanes],
- as a structure skin, as a slush skin, as a spray skin and/or as a casting skin, in particular for airbag covers with weakening structures,
which cutting tool (100) is controlled in its motion, in particular program- and/or robot-controlled, the tool comprising at least one cutting head (10)
- with at least one cutting blade (35),
- with at least one blade holder (30) for the cutting blade, and
- with at least one drive device (20) setting the blade holder (30) with the cutting blade (35) in an oscillating or pulsating cutting motion or
- with at least one robot-controlled device setting the blade holder (30) with the cutting blade (35) in a drawing, advancing motion, producing the cut,
- with a control circuit for the in-process regulation of the remaining wall thickness (A2) of the cut-in materials (70) during the formation of lines of weakness or of desired rupture and penetration lines, that is during the airbag weakening; at least one distance sensor (85) with a measuring principle being provided on the cutting head (10) of the cutting tool (100), next to its cutting blade (35) or next to the cutting tool (100), connected to the guiding and moving device of the latter, for measuring the distance from a cutting counter plate (81), which sensor is chosen such that the sensor signal cannot be influenced in any way by a mould skin lying in the cutting receptacle, the sensor signal serving as a measured variable of the control circuit, in which
- the distance (A) between the distance sensor (85) and the cutting counter plate (81) or
- the distance (A2) between the tool tip, that is the cutting blade (35), and the cutting counter plate (81) is the controlled variable,
- the robot-controlled device with its control circuit or at least one additional interposed adjusting axis acting as the final controlling element, and the remaining wall thickness (A2) is calculated from the measured distance less a distance (A1), (A1) being the difference in height between the distance sensor (85) and the tip of the cutting blade (35), and
- the distance sensor (85) being based on an inductive functional principle, and the inductive sensor of the distance sensor (85) being tuned in such a way that the distance of the inductive sensor from at least one electrically conducting object, in particular from the cutting counter plate (81), can be sensed.

2. A cutting tool according to claim 1, **characterized in that** the distance sensor (85) is formed as at least one cylindrical body, which is connected to the cutting head (10) by means of at least one one-part or multi-part connection (40, 42).

3. A cutting tool according to either of claims 1 and 2, **characterized in that** the control circuit
- is formed as a position control circuit and/or
- is integrated in the cutting tool (100).

4. A cutting tool according to at least one of claims 1 to 3, **characterized in that** the connection of the control circuit to the cutting tool (100) is formed in such a way that the measured variable, i.e. the signal of the distance sensor (85),
- can be amplified and
- fed into the control circuit at at least one analogue interface of the control.

5. A method for the in-process regulation of the remaining wall thickness (A2) during weakening of the airbag by means of a cutting tool (100) controlled in its motion, in particular program- and/or robot-controlled, for materials (70), in particular
- of P[oly]U[rethane] Elastomers,
- of P[oly]V[inyl] C[hloride],
- of T[hermo]P[lastic] E[lastomers], including those based on polyester or polyether ester,
- of T[hermo]P[lastic] o[lefins] and/or
- of T[hermo]P[lastic poly]U [rethanes],
as a structure skin, as a slush skin, as a spray skin and/or as a casting skin, the cutting tool (100) having at least one cutting head (10)
- with at least one cutting blade (35) and
- with at least one blade holder (30) for the cutting blade (35), the blade holder (30) with the cutting blade (35)
- being set in an oscillating or pulsating cutting motion by means of at least one drive device (20) or
- being set in a drawing, advancing motion, producing the cut, by means of at least one robot-controlled device,
- the cutting blade (35) being moved at at least a prescribed rate of advancement along the desired rupture line and the material (70) being cut into to produce weakening structures in the material (70) of the airbag cover that run along at least one desired rupture line,
- the distance (A) from the distance sensor (85) to a cutting counter plate (81), receiving the material (70) to be cut into, being measured by means of at least one distance sensor (85) arranged next to the cutting tool (100) or next to the cutting blade (35) and taken along together with the cutting tool (100) or together with the cutting blade (35), and
- the remaining wall thickness (A2) being calculated from the distance (A) measured between the distance sensor (85) and the cutting counter plate (81) less the value prescribed and kept constant during the cutting operation for the distance (A1) of the distance sensor (85) from the base area, i.e. from the bottom area (86) of the incision in the material (70), the depth of the cutting blade (35) being automatically corrected in the event of deviations.

6. A method according to claim 5, **characterized in that**, for the in-process regulation of the remaining wall thickness (A2) of cut-in materials (70) during the formation of lines of weakness or of desired rupture and penetration lines during the airbag weakening, at least one distance sensor (85) with a measuring principle is provided on the cutting head (10) of the cutting tool (100), next to its cutting blade (35) or next to the cutting tool (100), connected to the guiding and moving device of the latter, for measuring the distance from the cutting counter plate (81), which sensor is chosen such that the sensor signal is not influenced in any way by a mould skin lying in the cutting receptacle, the sensor signal serving as a measured variable of a control circuit, in which
- the distance (A) between the distance sensor (85) and the cutting counter plate (81) or
- the distance (A2) between the tool tip, that is the cutting blade (35), and the cutting counter plate (81) is the controlled variable, the robot-controlled device with its control circuit or at least one additionally interposed adjusting axis acting as the final controlling element, the remaining wall thickness (A2) being calculated from the value of the distance (A) between the distance sensor (85) and the cutting counter plate (81) less the difference in height (A1) between the distance sensor (85) and the tip of the cutting blade (35).

7. A method according to claim 5 or 6, **characterized in that** the connection of the control circuit, in particular of the position control circuit, to the cutting tool (100) is formed in such a way that the measured variable, i.e. the signal of the distance sensor (85),
- is amplified and
- fed into the control circuit at at least one analogue interface of the control.

8. The use of at least one cutting tool (100) according to at least one of claims 1 to 4 and/or of a method according to at least one of claims 5 to 7 in the production of airbag covers with weakening structures, in particular during the formation of lines of weakness or of desired rupture and penetration lines in materials (70) intended for the covering of airbags, for example
- of P[oly]U[rethane] Elastomers,
- of P[oly]V[inyl] C[hloride],
- of T[hermo]P[lastic] E [lastomers], including those based on polyester or polyether ester,
- of T[hermo]P[lastic] O[lefins] and/or
- of T[hermo]P[lastic poly]U[rethanes]
as a structure skin, as a slush skin, as a spray skin and/or as a casting skin.

## Revendications

1. Outil de coupe (100) pour des matériaux (70)
notamment
- en élastomères polyuréthanne PU,
- en chlorure de polyvinyle PVC,
- en élastomères thermoplastiques TPE, également à base de polyester ou de polyéther-ester,
- en oléfines thermoplastiques TPO et/ou
- en polyuréthannes thermoplastiques TPU
en tant que peau structurée, que peau « slush », que peau injectée par pulvérisation et/ou en tant que peau de coulage, notamment pour les revêtements d'airbags à structures d'atténuation,
lequel outil de coupe (100) est commandé dans son mouvement, notamment commandé par programme et/ou par robot, comprenant au moins une tête de coupe (10)
- dotée d'au moins une lame de coupe (35),
- dotée d'au moins un porte-lame (30) pour la lame de coupe et
- dotée d'au moins un dispositif d'entraînement (20) mettant le porte-lame (30) muni de la lame de coupe (35) dans un mouvement de coupe oscillant ou pulsatoire ou
- dotée d'au moins un dispositif commandé par robot et mettant le porte-lame (30) muni de la lame de coupe (35) dans un mouvement d'avance traînant, créant la coupe,
- comprenant un circuit pour le réglage en process de l'épaisseur restante (A2) des matériaux coupés (70) lors de la formation de lignes d'atténuation ou de lignes destinées à la rupture et de lignes de division, donc, lors de l'atténuation de l'airbag, au moins un capteur de distance (85) ayant un principe de mesure étant prévu sur la tête de coupe (10) de l'outil de coupe (100) à côté de la lame de coupe (35) de celui-ci ou à côté de l'outil de coupe (100) en étant raccordé au dispositif de guidage et de déplacement de celui-ci pour mesurer l'écart par rapport à un contre-plateau de coupe (81), ce capteur étant sélectionné de telle manière que le signal du capteur n'est aucunement influençable par une peau de moulage située dans le logement de coupe, le signal du capteur servant de grandeur de mesure du circuit de réglage, dans lequel
- l'écart (A) entre le capteur de distance (85) et le contre-plateau de coupe (81) ou
- l'écart (A2) entre la pointe d'outil, donc la lame de coupe (35), et le contre-plateau de coupe (81) est la grandeur de réglage,
- le dispositif commandé, par robot, avec son circuit de réglage, ou au moins un axe de réglage supplémentaire intercalé agit en tant qu'organe de réglage, et l'épaisseur restante (A2) est calculée à partir de l'écart mesuré moins un écart (A1), (A1) étant la différence de hauteur entre le capteur de distance (85) et la pointe de la lame de coupe (35) et dans lequel
- le capteur de distance (85) repose sur le principe de fonctionnement inductif et le capteur inductif du capteur de distance (85) est accordé de telle manière que l'écart du capteur inductif par rapport à au moins un objet conducteur électrique, en particulier le contre-plateau de coupe (81), est détectable.

2. Outil de coupe selon la revendication 1,
**caractérisé en ce**
**que** le capteur de distance (85) est formé comme au moins un corps cylindrique qui est raccordé à la tête de coupe (10) par l'intermédiaire d'au moins une liaison (40, 42) en une partie ou plusieurs parties.

3. Outil de coupe selon l'une des revendications 1 ou 2,
**caractérisé en ce**
**que** le circuit de réglage
- est formé comme circuit de réglage de position et/ou
- est intégré dans l'outil de coupe (100).

4. Outil de coupe selon l'une quelconque des revendications 1 à 3,
**caractérisé en ce**
**que** la liaison du circuit de réglage vers l'outil de coupe (100) est formée de telle manière que la grandeur de mesure, c'est-à-dire le signal du capteur de distance (85) peut être
- renforcé et
- alimenté dans le circuit de réglage sur au moins une interface analogique de la commande.

5. Procédé pour le réglage en process de l'épaisseur restante (A2) pour l'atténuation d'airbags au moyen d'un outil de coupe (100) à mouvement commandé, notamment commandé par programme et/ou par robot, pour des matériaux (70), notamment
- en élastomères polyuréthanne PU,
- en chlorure de polyvinyle PVC,
- en élastomères thermoplastiques TPE, également à base de polyester resp. de polyéther-ester,
- en oléfines thermoplastiques TPO et/ou
- en polyuréthannes thermoplastiques TPU
en tant que peau structurée, que peau « slush », que peau injectée par pulvérisation et/ou en tant que peau de moulage, l'outil de coupe (100) présentant au moins une tête de coupe (10)
- dotée d'au moins une lame de coupe (35),
- dotée d'au moins un porte-lame (30) pour la lame de coupe, le porte-lame (30) muni de la lame de coupe (35)
- étant mis dans un mouvement de coupe oscillant resp. pulsatoire au moyen d'au moins un dispositif d'entraînement (20) ou
- dans un mouvement d'avance traînant, créant la coupe, au moyen d'au moins un dispositif commandé par robot,
- la lame de coupe (35) pour créer des structures d'atténuation, s'étendant le long d'au moins une ligne destinée à la rupture, dans le matériau (70) du revêtement d'airbag étant déplacée avec au moins une vitesse d'avance prédéfinie le long de la ligne destinée à la rupture et le matériau (70) étant coupé,
- l'écart (A) du capteur de distance (85) par rapport à un contre-plateau de coupe (81) logeant le matériau (70) à découper étant mesuré au moyen d'au moins un capteur de distance (85) disposé à côté de l'outil de coupe (100) resp. à côté de la lame de coupe (35) et mené avec l'outil de coupe (100) resp. avec la lame de coupe (35) et
- l'épaisseur restante (A2) étant calculée à partir de l'écart (A) mesuré entre le capteur de distance (85) et le contre-plateau de coupe (81) moins la valeur, prédéfinie et maintenue constante pendant l'opération de coupe, pour l'écart (A1) du capteur de distance (85) par rapport à la surface de base, c'est-à-dire à la surface de fond (86) de la coupe dans le matériau (70), la profondeur de la lame de coupe (35) étant réglée automatiquement en cas de déviations.

6. Procédé selon la revendication 5,
**caractérisé en ce**
**que** pour le réglage en process de l'épaisseur restante (A2) de matériaux découpés (70) lors de la formation de lignes d'atténuation resp. de lignes destinées à la rupture et de lignes de division pour l'atténuation d'airbags, au moins un capteur de distance (85) ayant un principe de mesure est prévu sur la tête de coupe (10) de l'outil de coupe (100), à côté de la lame de coupe (35) de celui-ci ou à côté de l'outil de coupe (100) en étant raccordé au dispositif de guidage et de déplacement de celui-ci, pour mesurer l'écart par rapport au contre-plateau de coupe (81), ce capteur étant sélectionné de telle manière que le signal du capteur n'est aucunement influençable par une peau de moulage située dans le logement de coupe, le signal du capteur étant pris en compte comme grandeur de mesure d'un circuit de réglage, dans lequel
- l'écart (A) entre le capteur de distance (85) et le contre-plateau de coupe (81) ou
- l'écart (A2) entre la pointe d'outil, c'est-à-dire la lame de coupe (35), et le contre-plateau de coupe (81) est la grandeur de réglage, le dispositif commandé par robot, avec son circuit de réglage, ou au moins un axe de réglage supplémentaire intercalé agit en tant qu'organe de réglage, l'épaisseur restante (A2) étant calculée à partir de la valeur de l'écart (A) entre le capteur de distance (85) et le contre-plateau de coupe (81) moins la différence de hauteur (A1) entre le capteur de distance (85) et la pointe de la lame de coupe (35).

7. Procédé selon la revendication 5 ou 6,
**caractérisé en ce**
**que** la liaison du circuit de réglage, notamment du circuit de réglage de position, vers l'outil de coupe (100) est formée de telle manière que la grandeur de mesure, c'est-à-dire le signal du capteur de distance (85)
- est renforcé et
- alimenté dans le circuit de réglage sur au moins une interface analogique de la commande.

8. Utilisation d'au moins un outil de coupe (100) selon au moins l'une des revendications 1 à 4 et/ou d'un procédé selon au moins l'une des revendications 5 à 7 pour la fabrication de revêtements d'airbags avec des structures d'atténuation, notamment lors la formation de matériaux (70) pourvus de lignes d'atténuation resp. de lignes destinées à la rupture et de lignes de division pour le revêtement d'airbags, p. ex.
- en élastomères polyuréthanne PU,
- en chlorure de polyvinyle PVC,
- en élastomères thermoplastiques TPE, également à base de polyester ou de polyéther-ester,
- en oléfines thermoplastiques TPO et/ou
- en polyuréthannes thermoplastiques TPU
en tant que peau structurée, que peau « slush », que peau injectée par pulvérisation et/ou en tant que peau de moulage.
